# EUROPÄISCHE PATENTSCHRIFT

(11) **EP 3 839 316 B1**
(45) Veröffentlichungstag und Bekanntmachung des Hinweises auf die Patenterteilung: **26.10.2022**
(21) Anmeldenummer: 19218253.3
(22) Anmeldetag: 19.12.2019
(51) Int. Cl.: F16L 33/207

(54) **KUPPLUNGSTEIL FÜR EINE SCHLAUCHKUPPLUNG**
COUPLING ELEMENT FOR A HOSE COUPLING
PIÈCE D'ACCOUPLEMENT POUR UN ACCOUPLEMENT DE TUYAU

(43) Veröffentlichungstag der Anmeldung: 23.06.2021
(73) Patentinhaber: WALTER STAUFFENBERG GMBH & CO. KG, 58791 Werdohl (DE)
(72) Erfinder: WEILAND, Fritz Georg, 58540 Meinerzhagen (DE); KÖNIG, Ulrich Stefan, 58849 Herscheid (DE)
(74) Vertreter: Patentanwälte Dörner & Kötter PartG mbB

(56) Entgegenhaltungen:
- EP-A1- 1 007 875
- EP-A1- 1 300 622
- DE-A1- 2 331 977
- DE-U1-202004 008 126

## Beschreibung

Die Erfindung betrifft ein Kupplungsteil für eine Schlauchkupplung, insbesondere für Hochdruckhydraulikleitungen nach dem Oberbegriff des Patentanspruchs 1. Die Erfindung betrifft weiterhin eine Schlauchkupplung nach dem Patentanspruch 12.

Ein Kupplungselement für Hochdruckhydraulikleitungen ist aus dem deutschen Gebrauchsmuster DE 20 2004 008 126 U1 bekannt. Dieses Kupplungselement umfasst einen rohrartiger Anschlussstutzen, der einen Schlauchnippel und Mittel zum Anschluss an eine Armatur aufweist. An dem Schlauchnippel ist eine Schlauchhaltevorrichtung in Form rippenartiger Ausformungen vorgesehen. Der verwendete Hochdruckschlauch ist in der Regel mehrlagig und enthält in bekannter Weise eine Metalleinlage, die für Hochdruckanwendungen notwendig ist. Zur Montage wird der Schlauchnippel des Kupplungselementes in den Innenschlauch des zu befestigenden Hochdruckschlauchs eingeschoben. Die rippenartigen Ausformungen verhindern dann ein leichtes Abziehen des Schlauches. Gleichzeitig mit dem Hochdruckhydraulikschlauch wird in der Regel eine auf dem Schlauchende sitzende Pressfassung auf den Schlauchnippel aufgeschoben. Ein gattungsgemäßes Kupplungselement ist zudem in der EP 1 007 875 A1 beschrieben. Zur festen Verbindung des Hochdruckhydraulikschlauchs mit dem Kupplungselement wird die Pressfassung durch radiales Verpressen auf das Kupplungselement aufgepresst. Während des Pressvorgangs kann es zu Dehnbelastungen des Innenschlauchs relativ zum Schlauchkörper kommen, was zu Mikrorissen im Innenschlauch führen kann, wodurch die Dichtigkeit der Verbindung mit der Hochdruckleitung nicht mehr gewährleistet ist.

Hier will die Erfindung Abhilfe schaffen. Der Erfindung liegt die Aufgabe zugrunde, ein Kupplungsteil für eine Schlauchkupplung zu schaffen, bei der die Gefahr von Mikrorissen im Schlauchinnenkörper beim Verpressen einer außen auf dem Schlauchende sitzenden Pressfassung vermieden ist. Gemäß der Erfindung wird diese Aufgabe durch ein Kupplungsteil mit den Merkmalen des kennzeichnenden Teils des Patentanspruchs 1 gelöst.

Mit der Erfindung ist ein Kupplungsteil für eine Schlauchkupplung geschaffen, bei der die Gefahr von Mikrorissen im Schlauchinnenkörper beim Verpressen einer außen auf dem Schlauchende sitzenden Pressfassung vermieden ist. Dadurch, dass das Rippenprofil wenigstens zwei Profilabschnitte aufweist, wobei die Nuten eines ersten, dem Anschlusskopf zugewandten Profilabschnitts einen symmetrischen und die Nuten eines benachbart zum ersten Profilabschnitt angeordneten zweiten Profilabschnitts einen asymmetrischen Querschnitt mit einem gegenüber den Nuten des ersten Profilanschnitts größeren Nutenvolumen aufweisen, ist eine entsprechend den auf dem Innenschlauch einwirkenden axialen Kräften und der hierdurch verursachten Materialverschiebung erforderliches Aufnahmevolumen der Nuten bewirkt.

Der zweite Profilabschnitt weist wenigstens zwei asymmetrische Nuten auf, wobei wenigstens eine der asymmetrischen Nuten ein kleineres Nutenvolumen aufweist, als eine in Richtung des Auffädelabschnitts benachbarte weitere asymmetrische Nut. Hierdurch ist eine entsprechend der Materialverdrängung des Schlauchinnenmantels beim Verpressen ausreichende Materialaufnahme bereitgestellt.

In Weiterbildung der Erfindung weisen die Nuten des zweiten Profilabschnitts ein größeres Nutenvolumen auf, als die Nuten des ersten Profilabschnitts. Hierdurch ist die Belastung des Innenschlauchs beim Verpressen der Pressfassung weiter vermindert. Es hat sich gezeigt, dass das erforderliche Materialaufnahmevolumen der Nuten in Richtung des Anschlusskopfes abnimmt. Durch den asymmetrisch ausgebildeten Profilabschnitt ist sowohl ein ausreichendes Aufnahmevolumen für Innenschlauchmaterial während des Pressvorgangs als auch eine erforderliche Abzugshemmung, bei gleichzeitig geringem Widerstand beim Aufschieben des Schlauchabschnitts auf den Pressnippel bewirkt.

In Ausgestaltung der Erfindung ist zwischen dem ersten Profilabschnitt und dem zweiten Profilabschnitt ein zylindrischer Abschnitt angeordnet, der auf seiner dem ersten Profilabschnitt zugewandten Seite in eine symmetrische Nut und auf seiner dem zweiten Profilabschnitt zugewandten Seite in eine asymmetrische Nut übergeht. Hierdurch ist eine gute Führung des aufzuschiebenden Schlauchabschnitts erzielt. Zudem ist durch den zylindrischen Abschnitt eine gute axiale Fixierung einer verpressten Pressfassung erzielt, die um diesen zylindrischen Abschnitt einen Hinterschnitt ausbildet.

In weiterer Ausgestaltung der Erfindung weisen die asymmetrischen Nuten einen wannenförmigen Querschnitt auf, mit einem ebenen Nutengrund, der durch zwei winklig angestellte Nutenwände unterschiedlicher Steigung begrenzt ist, wobei die dem Anschlusskopf zugewandte Einlaufwand eine geringere Steigung aufweist, als die dem Anschlusskopf abgewandte Dichtwand. Hierdurch ist ein Einfließen von verdrängtem Innenschlauchvolumen begünstigt, wodurch die Materialstressung vermindert ist. Das Material wird durch die Einlaufwand gegen die Dichtwand geleitet, wo es angestaut wird, wodurch eine gute Dichtwirkung sowie auch eine gute Abzugshemmung bewirkt ist.

In weiterer Ausgestaltung der Erfindung schließt die Einlaufwand mit dem Nutengrund einen Winkel α von größer gleich 155 Grad und kleiner gleich 165 Grad, bevorzugt von 160 Grad ein. Es hat sich gezeigt, dass hierdurch eine besonders geringe Materialstressung des Schlauchinnenmantels erzielt ist. Vorteilhaft schließt die Dichtwand mit dem Nutengrund einen Winkel β von größer gleich 115 Grad und kleiner gleich 125 Grad, bevorzugt von 120 Grad ein.

In Weiterbildung der Erfindung weist der Pressnippel an seinem dem Anschlusskopf gegenüberliegenden Ende einen Auffädelabschnitt auf, der aus einem zylindrischen Teilabschnitt gebildet ist, der in einen konischen Endabschnitt übergeht. Hierdurch ist ein Aufschieben eines Schlauchabschnitts erleichtert. Bevorzugt ist der zylindrische Teilabschnitt durch eine Dichtwand einer asymmetrischen Nut begrenzt.

In Ausgestaltung der Erfindung weist der zweite Profilabschnitt wenigstens drei, bevorzugt wenigstens vier asymmetrische Nuten auf. Hierdurch ist ein ausreichendes Aufnahmevolumen für Innenschlauchmaterial bei der Verpressung der Pressfassung bereitgestellt, wodurch die Materialstressung minimiert und zugleich die Dichtwirkung maximiert ist.

In weiterer Ausgestaltung der Erfindung weisen alle asymmetrischen Nuten des zweiten Profilabschnitts ein größeres Nutenvolumen auf, je geringer ihr Abstand zum Auffädelabschnitt ist. Hierdurch ist eine entsprechend der Materialverdrängung des Schlauchinnenmantels beim Verpressen ausreichende Materialaufnahme bereitgestellt.

In Weiterbildung der Erfindung weist der erste Profilabschnitt wenigstens zwei Rippen auf, wobei die vom Anschlusskopf gesehen erste Rippe einen gegenüber der übrigen Mantelfläche des Pressnippels vergrößerten Außendurchmesser aufweist und wobei die Mantelfläche dieser ersten Rippe bevorzugt einen bogenförmigen, insbesondere kreisbogenförmigen Querschnitt aufweist. Hierdurch ist eine gute Fixierung eines aufgeschobenen Schlauchabschnitts erzielt, der, bedingt durch den kreisbogenförmigen Querschnitt der ersten Rippe trotz ihres größeren Durchmessers gut über diese hinüberschiebbar ist.

In Ausgestaltung der Erfindung ist zwischen dem Anschlusskopf und dem Pressnippel ein zylindrisches Haltestück angeordnet, an dem ein zumindest bereichsweise umlaufender Haltesteg angeformt ist, dessen Außendurchmesser größer ist, als der maximale Durchmesser des Pressnippels. Hierdurch ist eine zuverlässige Verbindung mit der Pressfassung erzielt.

Gegenstand der vorliegenden Erfindung ist weiterhin eine Schlauchkupplung, mit einem solchen Kupplungsteil und eine zumindest bereichsweise hülsenförmige Pressfassung, die auf einen auf den Pressnippel des Kupplungsteils aufgeschobenen Schlauchabschnitt montierbar und zur Befestigung mit dem Pressnippel durch radial einwirkenden Druck verpressbar ist, wobei die Pressfassung an ihrer Innenmantelfläche mit einem Krallprofil versehen ist, das aus radial nach innen gerichteten, umlaufenden Krallrippen mit im Wesentlichen dreieckförmigen Querschnitt zum Eindringen in die Außenmantelfläche des Schlauchbschnitts während der Verpressung gebildet ist und wobei das Krallprofil vorzugsweise einen sägezahnförmigen Querschnitt aufweist.

In Weiterbildung der Erfindung weist die Pressfassung dem Krallprofil vorgelagert eine Haltenut auf, in die ein an dem Kupplungsteil zwischen dem Anschlusskopf und dem Pressnippel angeordneter Haltesteg nach Verpressen der Pressfassung auf dem Pressnippel eingreift.

Andere Weiterbildungen und Ausgestaltungen der Erfindung sind in den übrigen Ansprüchen angegeben. Ein Ausführungsbeispiel der Erfindung ist in den Zeichnungen dargestellt und wird nachfolgend im Einzelnen beschrieben. Es zeigen:

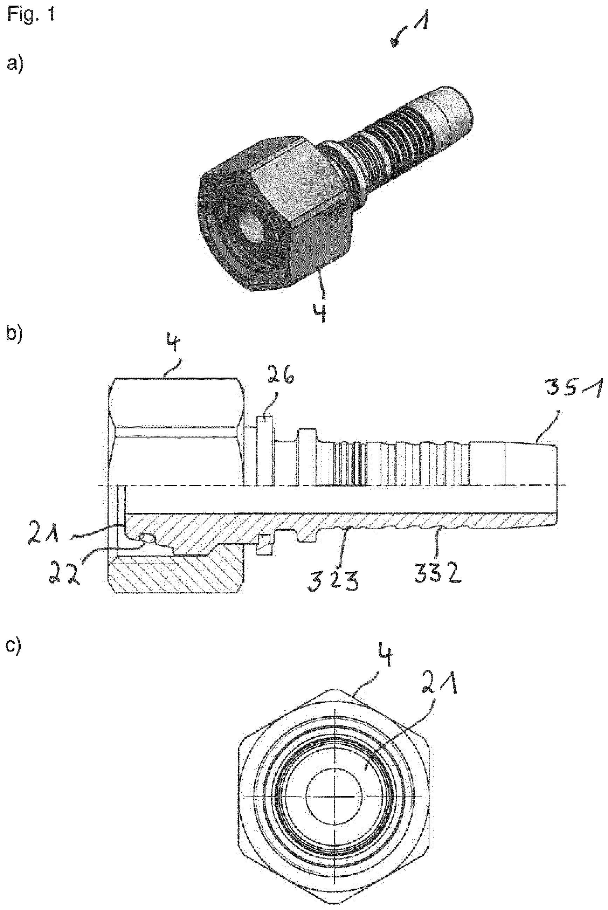

- Figur 1: die schematische Darstellung eines Kupplungsteils
a) in räumlicher Darstellung;
b) im Teillängsschnitt;
c) in der Draufsicht;
- Figur 2: die schematische Darstellung des Pressnippels des Kupplungsteils aus Figur 1 im Teillängsschnitt:
- Figur 3: die Detaildarstellung des ersten Profilabschnitts "A" aus Figur 2;
- Figur 4: die Detaildarstellung des zweiten Profilabschnitts "B" aus Figur 2;
- Figur 5: die Darstellung einer Schlauchkupplung mit mittels Pressfassung montiertem Schlauch;
- Figur 6: die Detaildarstellung des Schlauchverhaltens während der Verpressung der Pressfassung in vier aufeinanderfolgenden Presszuständen.

Das als Ausführungsbeispiel gewählte Kupplungsteil 1 umfasst einen Anschlusskopf 2, an dem ein Pressmittel 3 angeformt ist. Entlang seiner Längsmittelachse ist das Kupplungsteil 1 mit einer Durchgangsbohrung 11 versehen.

Der Anschlusskopf 2 weist ein konisch sich erweiterndes Steckerteil 21 auf, das mit einer Nut 211 zur Aufnahme eines Dichtrings 22 versehen ist. An das Steckerteil 21 schließt sich ein durchmessererweiterter Bund 23 an, durch den ein Anschlag 231 gebildet ist. An seiner dem Anschlag 231 gegenüberliegenden Seite ist der Bund 23 mit einer Fase 24 versehen, an die sich ein zylindrischer Abschnitt 25 anschließt. Der zylindrische Abschnitt 25 ist mit einer Nut 251 zur Aufnahme eines Sprengrings 26 versehen. Der Anschlusskopf 2 nimmt eine Überwurfmutter 4 auf, die an der Fase 24 anliegt und durch den Sprengring 26 axial verliersicher gehalten ist.

Der Pressnippel 3 ist im Wesentlichen gebildet durch einen Halteabschnitt 31, an den sich ein erster Profilabschnitt 32 und ein zweiter Profilabschnitt 33 anschließen, zwischen denen ein zylindrischer Abschnitt 34 angeordnet ist. Endseitig schließt sich an den zweiten Profilabschnitt 33 ein Auffädelabschnitt 35 an.

Der Halterabschnitt 31 ist im Wesentlichen zylindrisch ausgebildet und weist etwa mittig einen umlaufenden Haltekragen 311 auf, der zusammen mit dem zylindrischen Abschnitt 25 des Anschlusskopfes 2 eine Haltenut 312 begrenzt. An den Halteabschnitt 31 schließt sich der erste Profilabschnitt 32 an, der im Ausführungsbeispiel zwei parallel zueinander angeordnete Rippen 321, 322 aufweist, die durch drei symmetrische Nuten 323 begrenzt sind. Die Nuten 323 weisen einen Querschnitt in Form eines gleichschenkligen Trapezes auf. Die vom Anschlusskopf 2 her gesehene erste Rippe 321 weist einen gegenüber der zweiten Rippe 322 vergrößerten Außendurchmesser auf. Die Mantelfläche dieser ersten Rippe 321 weist dabei einen kreisbogenförmigem Querschnitt auf.

Der zweite Profilabschnitt 33 umfasst im Ausführungsbeispiel drei parallel zueinander angeordnete Rippen 331, die jeweils durch asymmetrische Nuten 332 begrenzt sind. Die asymmetrischen Nuten 332 weisen einen wannenförmigen Querschnitt auf, mit einem ebenen Nutengrund, der durch zwei winklig angestellte Nutenwände unterschiedlicher Steigung begrenzt ist. Die dem Anschlusskopf 2 zugewandte Nutenwand bildet eine Einlaufwand 333 und weist eine geringere Steigung auf, als die dem Anschlusskopf 2 abgewandte Nutenwand, die eine Dichtwand 334 ausbildet. Im Ausführungsbeispiel schließt die Einlaufwand mit dem Nutengrund einen Winkel von 160° und die Dichtwand mit dem Nutengrund einen Winkel von 120° ein. Die Nuten 332 sind derart dimensioniert, dass sie ein größeres Nutenvolumen aufweisen, als die symmetrischen Nuten 323 des ersten Profilabschnitts 32.

Dabei sind die asymmetrischen Nuten 332 zueinander derart dimensioniert, dass sie jeweils ein größeres Nutenvolumen aufweisen, je geringer ihr Abstand zum Auffädelabschnitt 35 ist.

Der Auffädelabschnitt 35 ist im Wesentlichen zylindrisch ausgebildet und weist einen zylindrischen Abschnitt 352 auf, der in einen konisch sich verjüngenden Endabschnitt 351 übergeht.

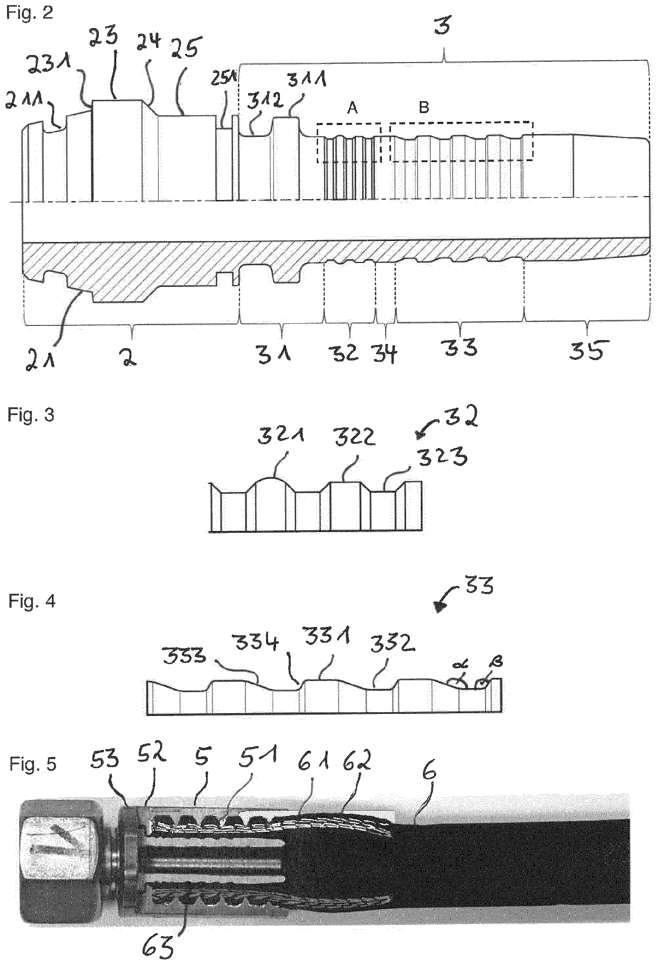

In Figur 5 ist eine Schlauchkupplung mit einem solchen Kupplungsteil 1 vor dem Verpressen der Pressfassung gezeigt. Hierbei ist ein Schlauchabschnitt 6 auf den Pressnippel 3 des Kupplungsteils 1 aufgeschoben, bis dieser an dem Halteabschnitt 31 anliegt. Dabei wurde das Obergummi 61 des Schlauchabschnitts 6 im Bereich der Presspassung 5 bis auf das Drahtgeflecht 62 geschält. Hierbei darf das Drahtgeflecht 62 nicht beschädigt werden, da es dem Innenschlauch 63 die Druckfestigkeit verleiht. Der Durchmesser des Schlauchabschnitts 6 ist derart gewählt, dass er kleiner oder übereinstimmend mit dem Innendurchmesser der Pressfassung 5 ist, die mit ihrem Krallprofil 51 über den Schlauchabschnitt 6 übergestülpt ist. Dem Krallprofil 51 vorgelagert weist die Pressfassung 5 eine Haltenut 52 auf, in die der Haltekragen 311 des Pressnippels 3 nach dem Verpressen der Pressfassung eingreift.

Die Pressfassung 5 ist im Wesentlichen hohlzylindrisch ausgebildet und weist auf ihrer Innenseite ein Krallprofil 51 auf. Dem Krallprofil vorgelagert ist eine Haltenut 52 angeordnet, die durch eine endseitige, mit einer Bohrung versehene Kopfscheibe 53 begrenzt ist. Die äußere Kontur der Pressfassung 5 kann in Abhängigkeit von dem jeweiligen Einsatzfeld der Schlauchkupplung unterschiedlich ausgebildet sein. So kann diese beispielsweise einen runden oder auch einen mehreckigen Querschnitt aufweisen. Die Wanddicke der Pressfassung ist so gewählt, dass sie der radial nach außen wirkenden Kraft, die durch das in dem Schlauchabschnitt 6 fließende Fluid standhalten kann.

Zur abzugssicheren Montage der Schlauchkupplung auf den Schlauchabschnitt 6 wird auf die Pressfassung 5 von außen ein radial wirkender Druck aufgebracht. Dieser äußere Druck bewirkt eine Komprimierung der Pressfassung 5, wodurch die Krallen des Krallprofils 51 in das Drahtgeflecht 62 des Schlauchabschnitts 6 eingepresst werden und zu einer festen Verbindung zwischen Kupplungsteil 1 und Schlauchabschnitt 6 führen. Weiterhin wird die Pressfassung 5 derart gestaucht, dass die Haltenut 52 der Pressfassung 5 den Haltekragen 311 des Pressnippels 3 umgreift, wodurch die Pressfassung 5 formschlüssig mit dem Pressnippel 3 verbunden ist. Die Bohrung der Kopfscheibe 53 liegt hierbei in der Haltenut 312 des Halteabschnitts 31 des Pressnippels 3 an.

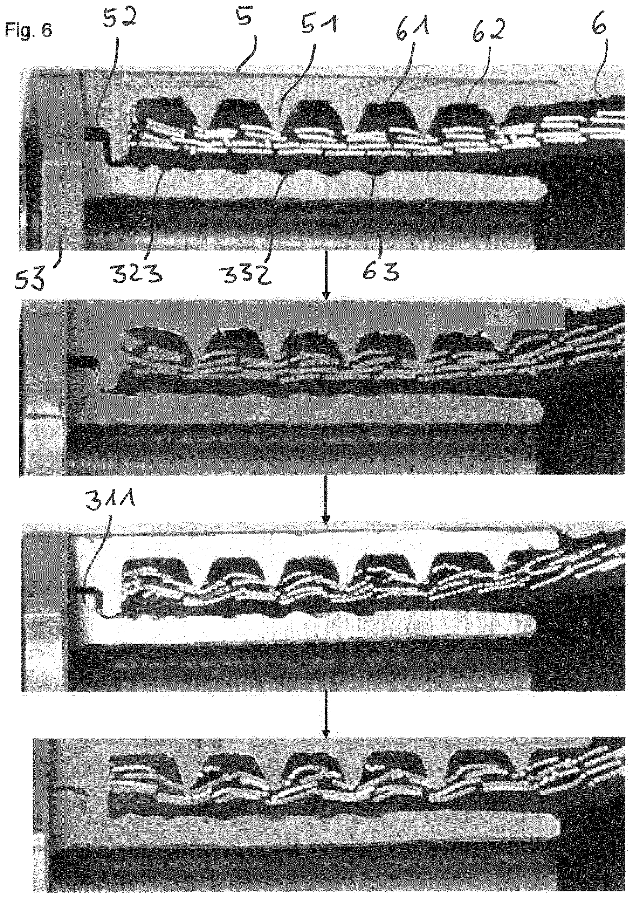

In Figur 6 sind verschiedene Presszustände der Schlauchkupplung während der Verpressung der Pressfassung in Längsschnittdarstellung gezeigt. Hierbei ist das Verhalten des Innenschlauchs 63 des Schlauchabschnitts 6 während des Pressvorgang gut ersichtlich. Bei zunehmendem Verpressen der Pressfassung 5 ist eine axiale Verschiebung bzw. Dehnung des Innenschlauchs 63 relativ zum Drahtgeflecht 62 ersichtlich. Das hierdurch gestauchte Innenschlauchmaterial kann über die Einlaufwände 333 der asymmetrische Nuten 332 des zweiten Profilabschnitts 33 nahezu widerstandsfrei in die asymmetrischen Nuten 332 einlaufen, bis es gegen die Dichtwände 334 der asymmetrischen Nuten 332 aufgestaut wird, wodurch bei minimaler Stressung des Innenschlauchmaterials eine hohe Dichtwirkung erzielt wird. Dabei liegt der Innenschlauch 63 im Bereich des ersten Profilabschnitts, wo nahezu keine axiale Verschiebung des Innenschlauchmaterials stattfindet, dichtend und haltend in den symmetrischen Nuten 323 des ersten Profilabschnitts 32 an. Weiterhin gut ersichtlich ist der durch die Verpressung erzielte Kraft-Formschluss zwischen Pressfassung 5 und Halteabschnitt 31 des Kupplungsteils 1, wobei die Haltenut 52 der Pressfassung 5 um den Haltekragen 311 des Halteabschnitts 31 verpresst wird.

Das erfindungsgemäße Kupplungsteil ist für eine große Bandbreite an Schläuchen geeignet. Je nach Außendurchmesser des aufzunehmenden Schlauchabschnitts ist eine entsprechende Pressfassung 5 auszuwählen, über die sodann der Schlauchabschnitt 6 mit dem Kupplungsteil 1 verpresst wird.

## Patentansprüche

1. Kupplungsteil (1) für eine Schlauchkupplung, insbesondere für Hochdruckhydraulikleitungen, mit einem Anschlusskopf (2) zur Verbindung mit einer Armatur und einem an diesem angeformten Pressnippel (3) zur Aufnahme eines Schlauchendabschnitts (6), auf dem ein aufgeschobener Schlauchendabschnitt (6) mittels einer diesen umfassenden, zumindest bereichsweise hülsenförmigen Pressfassung (5) durch Verpressen dichtend befestigbar ist und der ein Rippenprofil aufweist, das durch Nuten begrenzte Rippen umfasst, wobei das Rippenprofil wenigstens zwei Profilabschnitte (32, 33) aufweist, wobei die Nuten (323) des ersten, dem Anschlusskopf (2) zugewandten Profilabschnitts (32) einen symmetrischen und die Nuten (332) des zweiten Profilabschnitts (33) einen asymmetrischen Querschnitt aufweisen und wobei die Nuten (332) des zweiten Profilabschnitts (33) ein gegenüber den Nuten (323) des ersten Profilanschnitts (32) größeres Nutenvolumen aufweisen, wobei der zweite Profilabschnitt (33) wenigstens zwei asymmetrische Nuten (332) aufweist, **dadurch gekennzeichnet, dass** wenigstens eine der asymmetrischen Nuten (332) ein kleineres Nutenvolumen aufweist, als eine in Richtung des dem Anschlusskopf gegenüberliegenden Endes des Pressnippels benachbarte weitere asymmetrische Nut (332).

2. Kupplungsteil nach Anspruch 1, **dadurch gekennzeichnet, dass** zwischen dem ersten Profilabschnitt (32) und dem zweiten Profilabschnitt (33) ein zylindrischer Abschnitt (34) angeordnet ist, der auf seiner dem ersten Profilabschnitt (32) zugewandten Seite in eine symmetrische Nut (323) und auf seiner dem zweiten Profilabschnitt (33) zugewandten Seite in eine asymmetrische Nut (332) übergeht.

3. Kupplungsteil nach einem der vorgenannten Ansprüche, **dadurch gekennzeichnet, dass** die asymmetrischen Nuten (332) einen wannenförmigen Querschnitt aufweisen, mit einem ebenen Nutengrund, der durch zwei winklig angestellte Nutenwände (333, 334) unterschiedlicher Steigung begrenzt ist, wobei die dem Anschlusskopf zugewandte Einlaufwand (333) eine geringere Steigung aufweist, als die dem Anschlusskopf (2) abgewandte Dichtwand (334).

4. Kupplungsteil nach Anspruch 3, **dadurch gekennzeichnet, dass** die Einlaufwand (333) mit dem Nutengrund einen Winkel α von größer gleich 155 Grad und kleiner gleich 165 Grad, bevorzugt von 160 Grad einschließt.

5. Kupplungsteil nach Anspruch 3 oder 4, **dadurch gekennzeichnet, dass** die Dichtwand (334) mit dem Nutengrund einen Winkel β von größer gleich 115 Grad und kleiner gleich 125 Grad, bevorzugt von 120 Grad einschließt.

6. Kupplungsteil nach einem der vorgenannten Ansprüche, **dadurch gekennzeichnet, dass** der Pressnippel (3) an seinem dem Anschlusskopf (2) gegenüberliegenden Ende einen Auffädelabschnitt (35) aufweist, der aus einem zylindrischen Teilabschnitt (352) gebildet ist, der in einen konischen Endabschnitt (351) übergeht.

7. Kupplungsteil nach Anspruch 6, **dadurch gekennzeichnet, dass** der zylindrische Teilabschnitt (352) durch eine Dichtwand (334) einer asymmetrischen Nut (332) begrenzt ist.

8. Kupplungsteil nach einem der vorgenannten Ansprüche, **dadurch gekennzeichnet, dass** der zweite Profilabschnitt (33) wenigstens drei, bevorzugt wenigstens vier asymmetrische Nuten (332) aufweist.

9. Kupplungsteil nach einem der vorgenannten Ansprüche, **dadurch gekennzeichnet, dass** alle asymmetrischen Nuten (332) des zweiten Profilabschnitts (33) ein größeres Nutenvolumen aufweisen, je geringer ihr Abstand zum Auffädelabschnitt (35) ist.

10. Kupplungsteil nach einem der vorgenannten Ansprüche, **dadurch gekennzeichnet, dass** der erste Profilabschnitt (32) wenigstens zwei Rippen (321, 322) aufweist, wobei die vom Anschlusskopf (2) gesehen erste Rippe (331) einen gegenüber der übrigen Mantelfläche des Pressnippels vergrößerten Außendurchmesser aufweist und wobei die Mantelfläche dieser ersten Rippe (331) bevorzugt einen bogenförmigen, insbesondere kreisbogenförmigen Querschnitt aufweist.

11. Kupplungsteil nach einem der vorgenannten Ansprüche, **dadurch gekennzeichnet, dass** zwischen dem Anschlusskopf (2) und dem Pressnippel (3) ein zylindrischer Halteabschnitt (31) angeordnet ist, an dem ein zumindest bereichsweise umlaufender Haltekragen (311) angeformt ist, dessen Außendurchmesser größer ist, als der maximale Durchmesser des Pressnippels (3).

12. Schlauchkupplung, umfassend ein Kupplungsteil (1) nach einem der vorgenannten Ansprüche und eine zumindest bereichsweise hülsenförmige Pressfassung (5), die auf einen auf den Pressnippel (3) des Kupplungsteils (1) aufgeschobenen Schlauchabschnitt (6) montierbar und zur Befestigung mit dem Pressnippel (3) durch radial einwirkenden Druck verpressbar ist, wobei die Pressfassung (5) an ihrer Innenmantelfläche mit einem Krallprofil (51) versehen ist, das aus radial nach innen gerichteten, umlaufenden Krallrippen mit im Wesentlichen dreieckförmigem Querschnitt zum Eindringen in die Außenmantelfläche des Schlauchendabschnitts (6) während der Verpressung gebildet ist und wobei das Krallprofil (51) vorzugsweise einen sägezahnförmigen Querschnitt aufweist.

13. Schlauchkupplung nach Anspruch 12, **dadurch gekennzeichnet, dass** die Pressfassung (5) dem Krallprofil (51) vorgelagert eine Haltenut (52) aufweist, in die ein an dem Kupplungsteil (1) zwischen dem Anschlusskopf (2) und dem Pressnippel (3) angeordneter Haltekragen (311) nach Verpressen der Pressfassung (5) auf dem Pressnippel (3) eingreift.

## Claims

1. Coupling element (1) for a hose coupling, in particular for high-pressure hydraulic lines, having a connection head (2) for connection to a fitting and a press nipple (3) moulded thereon for receiving a hose end section (6), on which a pushed-on hose end section (6) can be fastened in a sealing manner by means of a press fitting (5) which surrounds the hose end section (6) and is sleeve-shaped at least in regions, and which has a rib profile, which comprises ribs delimited by grooves, wherein the rib profile has at least two profile sections (32, 33), wherein the grooves (323) of the first profile section (32) facing the connection head (2) have a symmetrical cross-section and the grooves (332) of the second profile section (33) have an asymmetrical cross-section and wherein the grooves (332) of the second profile section (33) have a larger groove volume than the grooves (323) of the first profile section (32), wherein the second profile section (33) has at least two asymmetrical grooves (332), **characterised in that** at least one of the asymmetrical grooves (332) has a smaller groove volume than a further asymmetrical groove (332) adjacent in the direction of the end of the press nipple opposite the connection head.

2. Coupling element according to claim 1, **characterised in that** between the first profile section (32) and the second profile section (33) a cylindrical section (34) is arranged, which merges into a symmetrical groove (323) on its side facing the first profile section (32) and which merges into an asymmetrical groove (332) on its side facing the second profile section (33).

3. Coupling element according to one of the previous claims, **characterised in that** the asymmetrical grooves (332) have a trough-shaped cross-section with a flat groove base, which is delimited by two groove walls (333, 334) of different pitch set at an angle, wherein the inlet wall (333) facing the connection head has a smaller pitch than the sealing wall (334) facing away from the connection head (2).

4. Coupling element according to claim 3, **characterised in that** the inlet wall (333) encloses an angle □ with the groove base of greater than or equal to 155 degrees and less than or equal to 165 degrees, preferably of 160 degrees.

5. Coupling element according to claim 3 or 4, **characterised in that** the sealing wall (334) encloses an angle □ with the groove base of greater than or equal to 115 degrees and less than or equal to 125 degrees, preferably of 120 degrees.

6. Coupling element according to one of the previous claims, **characterised in that** the press nipple (3) has, at its end opposite the connection head (2), a threading portion (35), which is formed by a cylindrical subsection (352), which merges into a conical end section (351).

7. Coupling element according to claim 6, **characterised in that** the cylindrical subsection (352) is delimited by a sealing wall (334) of an asymmetrical groove (332).

8. Coupling part according to one of the previous claims, **characterised in that** the second profile section (33) has at least three, preferably at least four asymmetrical grooves (332).

9. Coupling element according to one of the previous claims, **characterised in that** all asymmetrical grooves (332) of the second profile section (33) have a larger groove volume the smaller their distance to the threaded portion (35).

10. Coupling element according to one of the previous claims, **characterised in that** the first profile section (32) has at least two ribs (321, 322), wherein the first rib (331) as seen from the connection head (2) has an enlarged outer diameter compared to the remaining outer surface of the press nipple and wherein the outer surface of this first rib (331) preferably has an arcuate, in particular circular-arcuate cross-section.

11. Coupling element according to one of the previous claims, **characterised in that** between the connection head (2) and the press nipple (3) a cylindrical retaining section (31) is arranged, on which an at least partially circumferential retaining collar (311) is formed, whose outer diameter is greater than the maximum diameter of the press nipple (3).

12. Hose coupling comprising a coupling element (1) according to one of the previous claims and an at least partially sleeve-shaped press fitting (5), which can be mounted on a hose section (6) pushed onto the press nipple (3) of the coupling element (1) and can be pressed together with the press nipple (3) by radially acting pressure for fastening, wherein the press fitting (5) is provided on its inner circumferential surface with a claw profile (51) formed of radially inwardly directed circumferential claw ribs having a substantially triangular cross-section for penetration into the outer circumferential surface of the hose end section (6) during pressing, and wherein the claw profile (51) preferably has a sawtooth-shaped cross-section.

13. Hose coupling according to claim 12, **characterised in that** the press fitting (5) has a retaining groove (52) mounted in front of the claw profile (51), in which a retaining collar (311) arranged on the coupling element (1) between the connection head (2) and the press nipple (3) engages after pressing the press fitting (5) onto the press nipple (3).

## Revendications

1. Pièce (1) de raccord pour un raccord de flexible, notamment pour conduites hydrauliques haute pression, comprenant une tête de raccordement (2) pour établir la liaison avec une robinetterie, et un nipple de sertissage (3) modelé contre cette tête pour recevoir un segment terminal (6) de flexible, nipple sur lequel peut être fixé par sertissage étanchéisant un segment terminal (6) de flexible au moyen d'une monture de sertissage (5) entourant ce dernier et au moins localement en forme de douille, et qui présente un profil nervuré comprenant des nervures délimitées par des gorges, sachant que le profil nervuré présente au moins deux segments profilés (32, 33), sachant que les gorges (323) du premier segment profilé (32) qui regarde la tête de raccordement (2) présentent une section symétrique et que les gorges (332) du deuxième segment profilé (33) présentent une section asymétrique et sachant que les gorges (332) du deuxième segment profilé (33) présentent un plus grand volume que les gorges (323) du premier segment profilé (32), sachant que le deuxième segment profilé (33) présente au moins deux gorges asymétriques (332), **caractérisée en ce qu'**au moins l'une des gorges asymétriques (332) présente un volume de gorge plus petit qu'une rainure asymétrique (332) supplémentaire voisine de l'extrémité du nipple de sertissage située en face de la tête de raccordement.

2. Pièce de raccord selon la revendication 1, **caractérisée en ce qu'**entre le premier segment profilé (32) et le deuxième segment profilé (33) est disposé un segment cylindrique (34) qui sur son côté regardant le premier segment profilé (32) devient une gorge symétrique (323) et qui sur son côté regardant le deuxième segment profilé (33) devient une gorge asymétrique (332).

3. Pièce de raccord selon l'une des revendications précédentes, **caractérisée en ce que** les gorges asymétriques (332) présentent une section en forme de bac, avec un fond de gorge plat délimité par deux parois (333, 334) de gorge en angle de pentes respectives différentes, sachant que la paroi d'admission (333) regardant la tête de raccordement présente une pente moins forte que la paroi d'étanchéité (334) ne regardant pas la tête de raccordement (2).

4. Pièce de raccord selon la revendication 3, **caractérisée en ce que** la paroi d'admission (333) délimite, avec le fond de gorge, un angle □ égal ou supérieur à 155 degrés et inférieur ou égal à 165 degrés, de préférence de 160 degrés.

5. Pièce de raccord selon la revendication 3 ou 4, **caractérisée en ce que** la paroi d'étanchéité (334) délimite, avec le fond de gorge, un angle β égal ou supérieur à 115 degrés et inférieur ou égal à 125 degrés, de préférence de 120 degrés.

6. Pièce de raccord selon l'une des revendications précédentes, **caractérisée en ce que** le nipple de sertissage (3) présente, à son extrémité située en face de la tête de raccordement (2), un segment d'enfilage (35) formé à partir d'un segment partiel (352) cylindrique devenant un segment terminal (351) conique.

7. Pièce de raccord selon la revendication 6, **caractérisée en ce que** le segment partiel (352) cylindrique est délimité par une paroi d'étanchéité (334) d'une gorge asymétrique (332).

8. Pièce de raccord selon l'une des revendications précédentes, **caractérisée en ce que** le deuxième segment profilé (33) présente au moins trois, de préférence au moins quatre gorges asymétriques (332).

9. Pièce de raccord selon l'une des revendications précédentes, **caractérisée en ce que** toutes les gorges asymétriques (332) du deuxième segment profilé (33) présentent un volume de gorge croissant au fur et à mesure que leur écart diminue par rapport au segment d'enfilage (35).

10. Pièce de raccord selon l'une des revendications précédentes, **caractérisée en ce que** le premier segment profilé (32) présente au moins deux nervures (321, 322), sachant que la première nervure (331) observée depuis la tête de raccordement (2) présente un diamètre extérieur accru par rapport à la surface enveloppante restante du nipple de sertissage et sachant que la surface enveloppante de cette première nervure (331) présente de préférence une section arquée, en particulier en arc de cercle.

11. Pièce de raccord selon l'une des revendications précédentes, **caractérisée en ce qu'**entre la tête de raccordement (2) et le nipple de sertissage (3) est disposé un segment de retenue (31) cylindrique contre lequel est modelé un col de retenue (311) au moins localement périphérique, dont le diamètre extérieur est supérieur au diamètre maximal du nipple de sertissage (3).

12. Raccord de flexible, comprenant une pièce (1) de raccord selon l'une des revendications précédentes et une monture de sertissage (5) au moins localement en forme de douille, qu'il est possible de monter sur un segment de flexible (6) enfilé sur le nipple de sertissage (3) de la pièce (1) de raccord et qu'il est possible de sertir par application d'une pression à effet radial pour établir la fixation avec le nipple de sertissage (3), sachant que la monture de sertissage (5) est munie sur sa surface enveloppante intérieure d'un profilé à griffes (51) formé à partir de nervures-griffes périphériques dirigées radialement vers l'intérieur et qui présentent une section essentiellement triangulaire pour pénétrer dans la surface enveloppante extérieure du segment terminal (6) de flexible pendant le sertissage et sachant que le profilé à griffes (51) présente une section de préférence en forme de dents de scie.

13. Raccord de flexible selon la revendication 12, **caractérisée en ce que** la monture de sertissage (5) - située devant le profilé à griffes (51) - présente une gorge de retenue (52) dans laquelle un col de retenue (311), disposé contre la pièce (1) de raccord entre la tête de raccordement (2) et le nipple de sertissage (3), engrène sur le nipple de sertissage (3) après le sertissage de la monture de sertissage (5).
